# EUROPÄISCHE PATENTANMELDUNG

(11) **EP 1 241 815 A2**
(43) Veröffentlichungstag der Anmeldung: **18.09.2002**
(21) Anmeldenummer: 02004805.4
(22) Anmeldetag: 02.03.2002
(51) Int. Cl.: H04H 1/00

(54) **Verfahren und Schaltungsanordnung zur Erzeugung des RDS-Bittaktes**

(30) Priorität: 16.03.2001 DE 10112638
(71) Anmelder: Harman/Becker Automotive Systems (Becker Division) GmbH, 76307 Karlsbad (DE)
(72) Erfinder: Gierl, Stefan, 76133 Karlsruhe (DE); Benz, Christoph, 77797 Ohlsbach (DE)
(74) Vertreter: Patentanwälte Westphal, Mussgnug & Partner

(57) **Zusammenfassung**

Um zum Beispiel in einem Autoradio den RDS-Bittakt zu erzeugen, wird ein Vergleich der Periodendauer eines Taktgenerators (CG) und der des demodulierten RDS-Signals (S) durchgeführt. Ein erster Zähler (Z1), der den Taktgenerator (CG) triggert, zählt die von einem ersten Nulldurchgangdetektor (N1) detektierten Nulldurchgänge im RDS-Träger (TR). Ein zweiter Zähler (Z2) zählt die zwischen zwei Nulldurchgängen, die von einem zweiten Nulldurchgangdetektor (N2) detektiert werden, liegenden Abtastwerte des demodulierten RDS-Signals (S). Liegt die vom zweiten Zähler (Z2) gezählte Anzahl der Abtastwerte in einem vorgebbaren Toleranzbereich, so berechnet eine Recheneinheit (RE) ein Synchronsignal (SY) zur Synchronisation des Taktgenerators (CG) auf den RDS-Datenstrom. Das Synchronsignal (SY) inkrementiert oder dekrementiert den Zählerstand des ersten Zählers (Z1) so, dass Synchronisation zwischen dem Taktgenerator (CE) und dem RDS-Datenstrom erzielt wird.

## Beschreibung

Die Erfindung betrifft ein Verfahren und eine Schaltungsanordnung zur Erzeugung des RDS-Bittaktes mittels eines Taktgenerators.

Das Radio-Daten-System, abgekürzt RDS, wurde bei UKW-Rundfunksendern eingeführt, um Daten über die Rundfunksender und das von ihnen ausgestrahlte Programm zu den Rundfunkempfängern zu senden, wo diese Daten auf einer optischen Anzeigevorrichtung, meist ein Flüssigkeitskristallbildschirm, wiedergegeben werden. Bei den RDS-Daten handelt es sich z. B. um die Programmidentifikation PI, die das empfangene Programm oder den Namen des eingestellten Rundfunksenders angibt, oder um die Programmartkennung PTY, welche die Art des Programms, z. B. Musiksendung, Nachrichtensendung usw. anzeigt, oder um die Verkehrsdurchsagekennung TA oder um den Radiotext RT, der programmbegleitende Informationen enthält, wie z. B. Hinweise auf Musikstücke, Interpreten, Programmänderungen oder dergleichen.

Das Radio-Daten-System wird hauptsächlich bei Autoradios genutzt. Beispielsweise schalten RDS-taugliche Autoradios bei sich verschlechterndem Empfang des gerade eingestellten Senders automatisch auf einen besser oder sogar den am besten empfangbaren and das gleiche Programm ausstrahlenden Rundfunksender um. Die hierfür erforderlichen Informationen liefert die Programmidentifikation PI und die Liste der alternativen Frequenzen AF, die von RDS-tauglichen Rundfunksendern ausgestrahlt werden.

Doch auch für den Heimempfänger bietet das Radio-Daten-System dem Hörer Vorteile, z. B. die Programmartkennung PTY und der Radiotext RT, die bereits erläutert wurden.

Das RDS-Signal ist ein binäres Signal, das aus einem kontinuierlichen binären Datenstrom mit einer Bitrate von 1,1875Kbit/s besteht. Der RDS-Bittakt beträgt daher 1187,5 Hz.

UKW-Rundfunksender senden das sogenannte Stereomultiplexsignal aus, das aus dem Audiomittensignal bis 15KHz - auch Monosignal genannt -, dem Stereopilotton bei 19 KHz, dem Stereosignal von 23 KHz bis 53 KHz und dem ARI-Signal, einem schmalbandigen amplitudenmodulierten Signal bei 57 KHz, gebildet wird. ARI ist die Abkürzung für Autofahrer-Rundfunk-Information.

Das RDS-Signal, das eine größere Bandbreite als das ARI-Signal aufweist, wird dem ARI-Signal überlagert.

Damit einerseits eine hohe Datenrate beim RDS-Signal erzielt wird, andererseits aber Störungen des Audio-Mittensignals, des Stereosignals, des Stereopilottons und des ARI-Signales durch das RDS-Signal ausgeschlossen sind, ist das Frequenzspektrum des RDS-Signals auf ±2,4KHZ begrenzt. Das RDS-Signal wird aus dem RDS-Datenstrom durch Zweiseitenbandamplitudenmodulation mit Trägerunterdrückung erzeugt. Außerdem wird der unterdrückte RDS-Träger gegenüber dem ARI-Träger von 57KHz um 90° phasenverschoben. Durch diese Quadraturmodulation werden Störungen des ARI-Signals durch das RDS-Signal weitestgehend unterdrückt.

In einem RDS-tauglichen Rundfunksender wird dessen Träger vom Stereomultiplexsignal frequenzmoduliert und anschließend ausgestrahlt.

Auf der Empfängerseite wird der empfangene frequenzmodulierte Träger demoduliert, um das Stereomultiplexsignal zu gewinnen, aus dem durch Demodulation neben den Audiosignalen und dem ARI-Signal auch das RDS-Signal gewonnen wird.

Bei Empfang mittels eines Autoradios kann es in Folge der häufig wechselnden und oft ungenügenden Empfangsbedingungen längere Zeit dauern, bis das Autoradio auf den Träger von 57KHz des RDS-Signales synchronisiert ist. Hierzu ist im Autoradio die Erzeugung des RDS-Bittaktes mit einer Frequenz von 1187,5 Hz aus der RDS-Trägerfrequenz von 57 KHz erforderlich.

Weil die Bittaktfrequenz von 1187,5 Hz jedoch im allgemeinen kein ganzzahliger Bruchteil der Abtastfrequenz ist, kann der Bittakt in einem digitalen System nicht einfach durch Teilen der Trägerfrequenz von 57 KHz durch den Faktor 48 erzeugt werden. Der Bittakt ist zwar ein ganzzahliger Bruchteil der Trägerfrequenz von 57 KHz mit einem Teilerfaktor von 48, jedoch ist die Abtastfrequenz, mit der das digitale System arbeitet, kein ganzzahliger Bruchteil oder kein ganzzahliges Vielfaches der Trägerfrequenz. Somit kann der RDS-Bittakt nicht einfach durch Division der Trägerfrequenz von 57 KHz mit dem Teiler 48 erfolgen. Die Flanken des RDS-Bittaktes liegen üblicherweise zeitlich zwischen zwei Abtastwerten des Taktsignals.

Es ist daher Aufgabe der Erfindung, ein Verfahren und eine Schaltungsanordnung zur Erzeugung eines Bittaktes, insbesondere des RDS-Bittaktes, aus einer Frequenz anzugeben, die kein ganzzahliges Vielfaches oder kein ganzzahliger Bruchteil der Abtastfrequenz des Taktsignals ist.

Verfahrensmäßig wird diese Aufgabe mit den im Anspruch 1 angegebenen Merkmalen dadurch gelöst, dass aus einem Vergleich der Periodendauer des Taktgenerators mit der des demodulierten RDS-Signals ein Synchronsignal zur Synchronisation des Taktgenerators abgeleitet wird.

Schaltungsmäßig wird diese Aufgabe mit den im Anspruch 9 angegebenen Merkmalen dadurch gelöst, dass der RDS-Träger am Eingang eines ersten Nulldurchgangdetektors liegt, dessen Ausgang mit dem Zähleingang eines ersten Zählers verbunden ist, dass der Ausgang des ersten Zählers mit dem Triggereingang des Taktgenerators verbunden ist, dass das demodulierte RDS-Signal am Eingang eines zweiten Nulldurchgangdetektors liegt, dessen Ausgang mit dem Zähleingang eines zweiten Zählers verbunden ist, dass der Ausgang des zweiten Zählers mit dem Eingang einer Recheneinheit zur Berechnung des Synchronsignals für den ersten Zähler verbunden ist, dessen Korrektureingang mit dem Ausgang der Recheneinheit verbunden ist.

Das erfindungsgemäße Verfahren sieht einen Vergleich der Periodendauer des Taktgenerators mit der Periodendauer des demodulierten RDS-Signals vor. Aus diesem Vergleich wird ein Synchronsignal zur Synchronisation des Taktgenerators abgeleitet.

Hierzu werden die Nulldurchgänge des Trägers von 57 KHz des RDS-Signals von einem ersten Zähler gezählt, der den Taktgenerator triggert. Von einem zweiten Zähler wird die Anzahl der zwischen zwei Nulldurchgängen des demodulierten RDS-Signales liegenden Abtastwerte gezählt. Aus der Anzahl der gezählten Abtastwerte und dem letzten Nulldurchgang wird das Synchronsignal zur Synchronisation des Taktgenerators berechnet. Mit diesem Synchronsignal wird der erste Zähler auf den zur Synchronisation erforderlichen Zählerstand gebracht.

Ein Ausführungsbeispiel des erfindungsgemäßen Verfahrens sieht vor, den Zählerstand des ersten Zählers nur dann zu korrigieren, wenn die zwischen zwei Nulldurchgängen des demodulierten RDS-Signales erfaßte Anzahl an Abtastwerten in einem vorgebbaren Toleranzbereich liegt. Liegt die Anzahl der gezählten Abtastwerte außerhalb dieses vorgebbaren Toleranzbereiches, so wird der Zählerstand des ersten Zählers nicht korrigiert.

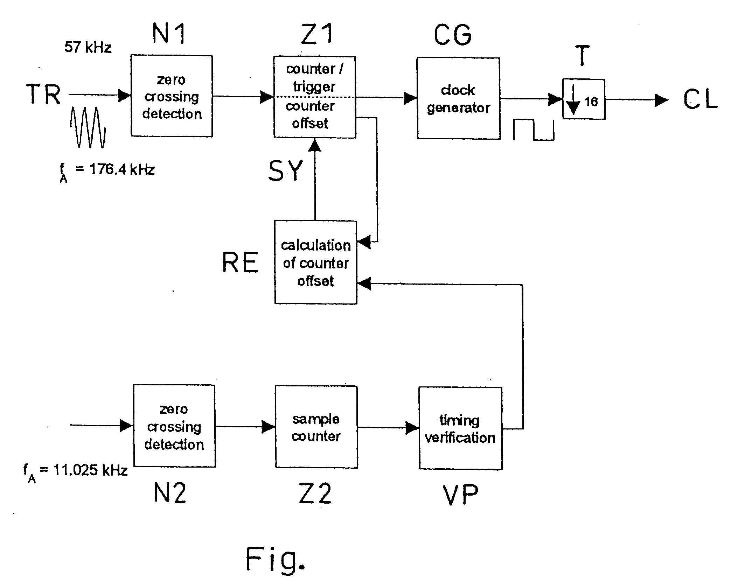

Die Erfindung wird anhand eines in der Figur abgebildeten Ausführungsbeispieles näher beschrieben und erläutert.

Bei dem in der Figur abgebildeten Ausführungsbeispiel einer erfindungsgemäßen Schaltungsanordnung zur Durchführung des erfindungsgemäßen Verfahrens liegt der Träger TR mit einer Frequenz von 57 KHz des RDS-Signals am Eingang eines Nulldurchgangdetektors N1, dessen Ausgang mit dem Zähleingang eines Zählers Z1 verbunden ist. Der Ausgang des Zählers Z1 ist mit dem Triggereingang eines Taktgenerators CG verbunden, dessen Ausgang mit dem Eingang eines Teilers T verbunden ist, an dessen Ausgang der RDS-Bittakt CL abnehmbar ist. Das demodulierte RDS-Signal S liegt am Eingang eines Nulldurchgangdetektors N2, dessen Ausgang mit dem Zähleingang eines Zählers Z2 verbunden ist. Der Ausgang des Zählers Z2 ist mit dem Eingang einer Vergleichs- und Prüfungseinheit VP verbunden, deren Ausgang mit dem Eingang einer Recheneinheit RE verbunden ist. Der Ausgang der Recheneinheit RE, an welchem das Synchronsignal SY zur Synchronisation des Taktgenerators CG abnehmbar ist, ist mit dem Korrektureingang des Zählers Z1 verbunden.

Der Nulldurchgangdetektor N1 detektiert die Nulldurchgänge im RDS-Träger, der eine Frequenz von 57 KHz aufweist und mit einer Frequenz von 176,4 KHz abgetastet wird. Der Zähler Z1 zählt die vom Nulldurchgangdetektor N1 detektierten Nulldurchgänge. Wenn der Zählerstand des Zählers Z1 einen vorgebbaren Wert, in diesem Fall 48, erreicht, gibt er einen Triggerimpuls an den Taktgenerator CG ab und wird anschließend zurück auf Null gesetzt. Das Taktsignal am Ausgang des Taktgenerators CG ändert bei jedem vom Zähler Z1 erhaltenen Triggerimpuls seine Polarität.

Der Nulldurchgangdetektor N2 detektiert die Nulldurchgänge des demodulierten RDS-Signals S, das mit einer Frequenz von 11,025 KHz abgetastet wird. Der Zähler Z2 zählt die Anzahl der zwischen zwei Nulldurchgängen des demodulierten RDS-Signals S liegenden Abtastwerte. In der Vergleichs- und Prüfungseinheit VP wird die vom Zähler Z2 gezählte Anzahl der Abtastwerte mit einem vorgebbaren Toleranzbereich verglichen. Liegt die Anzahl der vom Zähler Z2 erfaßten Abtastwerte in diesem Toleranzbereich, der bei diesem Ausführungsbeispiel 9 bis 10 Abtastwerte zwischen zwei Nulldurchgängen beträgt, so berechnet die Recheneinheit RE das Synchronsignal SY, welches den Zähler Z1 auf den Zählerstand setzt, mit dem eine Synchronisation des Taktgenerators CG erzielt wird. Liegt dagegen die Anzahl der vom Zähler Z2 gezählten Abtastwerte oberhalb oder unterhalb des vorgegebenen Toleranzbereiches von 9 bis 10 Abtastwerten, so wird der Zählerstand des Zählers Z1 nicht korrigiert.

Die Vergleichs- und Prüfungseinheit VP ist erforderlich, weil beim RDS-Signal die Periodendauer bei einem binären Datenwechsel sich von derjenigen bei einer permanenten 1- oder 0-Folge unterscheidet. Durch Korrigieren des Zählerstandes des Zählers Z1 wird daher der Taktgenerator CG genau auf den RDS-Datenstrom synchronisiert.

Um den RDS-Bittakt mit einer Frequenz von 1187,5 Hz bei einer Abtastrate von 11,025 KHz zu gewinnen, wird das Ausgangssignal des Taktgenerators CG vom Teiler P durch den Faktor 16 geteilt.

Ein erster Vorteil des erfindungsgemäßen Verfahrens und der erfindungsgemäßen Schaltungsanordnung liegt darin, dass der Taktgenerator sehr schnell synchronisiert wird oder mit anderen Worten ausgedrückt der Phasenregelkreis sehr schnell einrastet. Ein zweiter Vorteil der Erfindung ist darin zu sehen, dass das Verfahren als Software realisierbar ist.

### Bezugszeichenliste

- CG: Taktgenerator
- CL: RDS-Bittakt
- N1: Nulldurchgangdetektor
- N2: Nulldurchgangdetektor
- RE: Recheneinheit
- S: RDS-Signal
- SY: Synchronsignal
- P: Teiler
- TR: RDS-Träger
- VP: Vergleichs- und Prüfungseinheit
- Z1: Zähler
- Z2: Zähler

## Patentansprüche

1. Verfahren zur Erzeugung des RDS-Bittaktes (CL) mittels eines Taktgenerators (CG),
**dadurch gekennzeichnet, dass** aus einem Vergleich der Periodendauer des Taktgenerators (CG) und der des demodulierten RDS-Signals (S) ein Synchronsignal (SY) zur Synchronisation des Taktgenerators (CG) abgeleitet wird.

2. Verfahren nach Anspruch 1,
**dadurch gekennzeichnet, dass** der Taktgenerator (CG) von einem ersten Zähler (Z1) getriggert wird, der die Nulldurchgänge des RDS-Trägers (TR) zählt, bei einem vorgebbaren Zählerstand einen Triggerimpuls an den Taktgenerator (CG) gibt und anschließend auf Null zurückgesetzt wird, dass aus der Anzahl der Abtastwerte zwischen zwei Nulldurchgängen des demodulierten RDS-Signals (S) und dem letzten Nulldurchgang das Synchronsignal (SY) zur Synchronisation des Taktgenerators (CG) abgeleitet wird, wenn die Anzahl der Abtastwerte in einem vorgebbaren Toleranzbereich siegt.

3. Verfahren nach Anspruch 2,
**dadurch gekennzeichnet, dass** das Synchronsignal (SY) den Zählerstand des ersten Zählers (Z1) auf den korrekten Wert inkrementiert oder dekrementiert.

4. Verfahren nach Anspruch 1, 2 oder 3,
**dadurch gekennzeichnet, dass** die Anzahl der zwischen zwei Nulldurchgängen des demodulierten RDS-Signals (S) liegenden Abtastwerte von einem zweiten Zähler (Z2) gezählt wird.

5. Verfahren nach Anspruch 1, 2, 3 oder 4,
**dadurch gekennzeichnet, dass** der Takt am Ausgang des Taktgenerators (CG) um einen vorgebbaren Faktor geteilt wird.

6. Verfahren nach einem der vorangehenden Ansprüche 1 bis 5,
**dadurch gekennzeichnet, dass** der RDS-Träger (TR), der eine Frequenz von 57 KHz aufweist, mit einer Frequenz von 176,4 KHz, und das demodulierte RDS-Signal (S) mit einer Frequenz von 11,025 KHz abgetastet werden und dass der Takt am Ausgang des Taktgenerators (CG) durch den Faktor 16 geteilt wird.

7. Verfahren nach einem der vorangehenden Ansprüche 2 bis 6,
**dadurch gekennzeichnet, dass** der Toleranzbereich für die Anzahl der Abtastwerte des demodulierten RDS-Signals bei 9 bis 10 Abtastwerten zwischen zwei Nulldurchgängen liegt.

8. Verfahren nach Anspruch 6 oder 7,
**dadurch gekennzeichnet, dass** der erste Zähler (Z1) bei einem Zählerstand von 48 jeweils einen Triggerimpuls an den Taktgenerator (CG) abgibt und anschließend auf Null zurückgesetzt wird.

9. Schaltungsanordnung zur Erzeugung des RDS-Bittaktes (CL) mittels eines Taktgenerators (CG),
**dadurch gekennzeichnet, dass** der RDS-Träger (TR) am Eingang eines ersten Nulldurchgangdetektors (N1) liegt, dessen Ausgang mit dem Zähleingang eines ersten Zählers (Z1) verbunden ist, dass der Ausgang des ersten Zählers (Z1) mit dem Triggereingang des Taktgenerators (CG) verbunden ist, dass das demodulierte RDS-Signal (S) am Eingang eines zweiten Nulldurchgangdetektors (N2) liegt, dessen Ausgang mit dem Zähleingang eines zweiten Zählers (Z2) verbunden ist, dass der Ausgang des zweiten Zählers (Z2) mit dem Eingang einer Recheneinheit (RE) zur Berechnung des Synchronsignals (SY) verbunden ist und dass der Ausgang der Recheneinheit (RE), an dem das Synchronsignal (SY) abnehmbar ist, mit dem Korrektureingang des ersten Zählers (Z1) verbunden ist.

10. Schaltungsanordnung nach Anspruch 9,
**dadurch gekennzeichnet, dass** zwischen dem zweiten Zähler (Z2) und der Recheneinheit (RE) eine Vergleichs- und Prüfungseinheit (VP) zur Prüfung des Zählerstandes des zweiten Zählers (Z2) vorgesehen ist.

11. Schaltungsanordnung nach Anspruch 9 oder 10,
**dadurch gekennzeichnet, dass** der Ausgang des Taktgenerators (CG) mit dem Eingang eines Teilers (D) verbunden ist, an dessen Ausgang der RDS-Bittakt abnehmbar ist.
